(19) Europäisches Patentamt
European Patent Office
Office européen des brevets

(11) **EP 1 762 737 A2**

(12) **EUROPÄISCHE PATENTANMELDUNG**

(43) Veröffentlichungstag:
**14.03.2007  Patentblatt 2007/11**

(51) Int Cl.:
**F16D 33/02** *(2006.01)*

(21) Anmeldenummer: **06018940.4**

(22) Anmeldetag: **11.09.2006**

(84) Benannte Vertragsstaaten:
**AT BE BG CH CY CZ DE DK EE ES FI FR GB GR
HU IE IS IT LI LT LU LV MC NL PL PT RO SE SI
SK TR**
Benannte Erstreckungsstaaten:
**AL BA HR MK YU**

(30) Priorität: **13.09.2005  DE 102005043756**

(71) Anmelder: **Voith Turbo GmbH & Co. KG
89522 Heidenheim (DE)**

(72) Erfinder: **Menne, Achim, Dr.
74564 Crallshelm (DE)**

(74) Vertreter: **Schmidt, Sven Hendrik
Dr. Weitzel & Partner
Friedenstraße 10
89522 Heidenheim (DE)**

(54) **Hydrodynamische Kupplung**

(57)    Die Erfindung betrifft eine hydrodynamische Kupplung (1)

- mit einem Primärschaufelrad (2) und einem Sekundärschaufelrad (3), die einen mit Betriebsmittel befüllbaren Arbeitsraum (4) bilden;
- mit einem Betriebsmittelversorgungssystem (9);
- mit Mitteln (10) zur Beeinflussung des Strömungskreislaufes (5) des sich im Arbeitsraum (4) einstellenden Arbeitskreislaufes;
- mit einer Drosselscheibe (11), welche im Bereich der Trennebene (T) zwischen Primärschaufelrad und Sekundarschaufelrad angeordnet ist, einem der Schaufelräder (2,3) zugeordnet ist und dem Austritt des Strömungskreislaufes (5) aus dem Sekundärschaufelrad (3) nachgeordnet oder dem Eintritt in das Primärschaufelrad (2) vorgeordnet ist, wobei der Außendurchmesser ($d_{A11}$) der Drasselscheibe (11) größer als der Innendurchmesser ($d_{A14}$) des Arbeitsraumes (4) ist.
    Die hydrodynamische Kupplung ist durch das folgende Merkmal gekennzeichnet:
- die Mittel umfassen eine zweite Drosselscheibe (12), die in axialer Richtung zwischen dem Sekundärschaufelrad und dem Primärschaufelrad betrachtet der ersten Drosselscheibe (11) nachgeordnet ist, einen größeren Außendurchmesser ($d_{A12}$) als der Innendurchmesser ($d_{A14}$) des Arbeitsraumes (4) aufweist und axial verschiebbar zwischen einer ersten aktiven Stellung und einer zweiten inaktiven Stellung gegenüber dem Primärschaufelrad (2) ist, wobei die erste Stellung durch eine Position im Bereich der Trennebene zwischen dem Primärschaufelrad und dem Sekundärschaufelrad charakterisiert ist und die zweite Stellung durch eine Position im Bereich der axial äußeren Abmessung des Primärschaufelrades charakterisiert ist.

Fig.1

EP 1 762 737 A2

**Beschreibung**

Die Erfindung betrifft eine hydrodynamische Kupplung, im einzelnen mit den Merkmalen aus dem Oberbegriff des Anspruchs 1.

Hydrodynamische Kupplungen sind in einer Vielzahl von Ausführungen aus dem Stand der Technik bekannt. Diese umfassen im allgemeinen ein Primärschaufelrad und ein Sekundärschaufelrad und fungieren als Drehzahlwandler zwischen einem Antrieb und einem Abtrieb. Das Primärschaufelrad und das Sekundärschaufelrad bilden dabei einen Arbeitsraum, welcher vorzugsweise torusförmig ausgeführt ist und der mit Betriebsmittel befüllbar ist. Für einen bestimmten Füllungsgrad ist die hydrodynamische Kupplung über den gesamten Schlupfbereich durch eine bestimmte Kennlinie charakterisiert. Bei zusätzlich aktiver Änderung können Kennfeldbereiche überstrichen werden. Allerdings ist es in hohen Schlupfbereichen häufig nicht möglich, den Anforderungen an eine Antriebsmaschine gerecht zu werden. Insbesondere ist die Momentenaufnahme durch die hydrodynamische Kupplung in diesen Schlupfbereichen zu hoch, Dazu sind aus dem Stand der Technik Maßnahmen bekannt, um die Momentenaufnahme bei hohem Schlupf zu reduzieren. Als gängigstes Mittel wird dabei der Einbau einer sogenannten Drosselscheibe, die sich ausgehend von der Rotationsachse in den Arbeitsraum, hinein erstreckt, verwendet. Die Drosselscheibe ist dabei einem der beiden Schaufelräder zugeordnet und zumindest dem Austritt aus dem Sekundarschaufelrad nachgeordnet oder aber dem Eintritt in das Primärschaufelrad vorgeordnet. Der Außendurchmesser der Drosselscheibe ist durch einen größeren Durchmesser als der Innendurchmesser des Arbeitsraumes im Bereich der Trennebene charakterisiert. Das Vorsehen der Drosselscheibe ermöglicht es, gerade bei hohem Schlupf im Bereich zwischen 100 und ca. 70 % eine Beeinflussung des Strömungskreislaufes vorzunehmen, da sich dieser in diesem Bereich im wesentlichen im Bereich des inneren Durchmessers aufbaut. Dadurch wird das durch die hydrodynamische Kupplung gegenüber einer Ausführung ohne Drosselscheibe aufnehmbare Moment reduziert. Ferner sind allgemein weitere Maßnahmen bekannt, um das Übertragungsverhalten einer hydrodynamischen Kupplung während des Betriebes beziehungsweise bei unterschiedlichen Schlupfzuständen zu beeinflussen. Diese Maßnahmen sind im wesentlichen dadurch charakterisiert, dass entweder die Änderung des Füllungsgrades aktiv gesteuert wird oder aber zusätzliche Einbauten wirksam werden. Ein wesentlicher Nachteil einer Ausführung mit einer derartigen feststehenden Drosselscheibe besteht darin, dass hier nur eine Beeinflussung während des Anlaufvorganges, dass heißt im Bereich sehr hohen Schlupfes, in der Regel zwischen 100 und 70 %, gegeben ist. Mit zunehmender Verringerung des Schlupfes wird der Einfluss vermindert, da sich ein stabiler Strömungskreislauf oberhalb der Drosselscheibe ausbildet und diese somit nicht mehr den Strömungskreislauf aktiv beeinflussen kann.

Der Erfindung liegt daher die Aufgabe zugrunde, eine hydrodynamische Kupplung der eingangs genannten Art derart weiter zu entwickeln, dass auch über den gesamten Betriebsbereich, dass heißt bei jedem beliebigen Schlupfzustand hoher - und geringer Schlupf, eine Beeinflussung des Übertragungsverhaltens, insbesondere eine Senkung der Momentenaufnahme möglich ist, Die erfindungsgemäße Lösung soll sich dabei durch einen geringen konstruktiven und steuerungstechnischen Aufwand auszeichnen.

Die erfindungsgemäße Lösung ist durch die Merkmale des Anspruchs 1 charakterisiert. Vorteilhafte Ausgestaltungen sind in den Unteransprüchen wiedergegeben.

Eine hydrodynamische Kupplung mit einem Primärschaufelrad und einem Sekundärschaufelrad, die einen mit Betriebsmittel befüllbaren Arbeitsraum bilden und der ein Betriebsmittelversorgungssystem zugeordnet ist, weist Mittel zur Beeinflussung des Strömungskreislaufes auf. Diese umfassen erfindungsgemäß eine einem Schaufelrad fest zugeordnete Drosselscheibe, die im Bereich der Trennebene zwischen dem Primärschaufelrad und dem Sekundärschaufelrad angeordnet ist, und entweder dem Austritt aus dem Sekundärschaufelrad nachgeordnet ist oder aber dem Eintritt in das Primärschaufelrad vorgeordnet ist. Femer umfasst die hydrodynamische Kupplung eine weitere zweite Drosselscheibe, welche in axialer Richtung vom Sekundärschaufelrad zum Primärschaufelrad betrachtet, der ersten Drosselscheibe nachgeordnet ist und gegenüber, dieser und damit auch dem Primärschaufelrad verschiebbar gelagert ist. Die erste Drosselscheibe erstreckt sich dabei in jedem Betriebszustand in den Arbeitsraum hinein, Vorzugsweise ist diese als ebenes scheibenförmiges Element ausgeführt, welches parallel zur Trennebene angeordnet ist und einen Außendurchmesser aufweist, der größer als der Innendurchmesser des Arbeitsraumes ist. Vorzugsweise ist die erste Drosselscheibe drehfest mit einem der Schaufelräder verbunden. Die Verbindung erfolgt dabei vorzugsweise mit dem Sekundärrad oder einem mit diesem drehfest gekoppelten Element. Andere Ausführungen sind denkbar, Die zweite Drosselscheibe ist gegenüber der ersten axial verschiebbar gelagert. Die Zuordnung erfolgt zum Primärschaufelrad, wobei vorzugsweise die zweite Drosselscheibe an dieser axial verschiebbar gelagert ist. Die Verschiebbarkeit erfolgt dabei zwischen einer ersten, auch als aktive Stellung bezeichneten Position und einer zweiten, auch als inaktive Stellung bezeichneten Position und umgekehrt. Die erste aktive Position ist dabei durch eine Lage im Bereich der axialen Erstreckung des Arbeitsraumes zwischen der Trennebene und der in axialer Richtung äußersten Abmessung des den Arbeitsraum des Primärschaufelrades bildenden Teils charakterisiert, wobei hier vorzugsweise eine Position im Bereich der Trennebene T vorliegt, Die zweite inaktive Stellung ist durch eine Position der Drosselscheibe im Bereich der Begrenzung des Arbeitsraumes in axialer Richtung oder außerhalb charakterisiert. Dazu nimmt die zweite Drosselscheibe vorzugsweise eine Stellung ein, die entweder außerhalb des Arbeitsraumes liegt oder aber zumindest einen bündigen Abschluss mit diesem erlaubt und die zweite Drosselscheibe quasi einen Wandbereich des Arbeitsraumes bildet.

Durch die erfindungsgemäße Kombination einer festen und einer axial verschiebbaren Drosselscheibe besteht die Möglichkeit, einer Kennlinienanpassung in der inaktiven Stellung der zweiten Drosselscheibe durch eine Beeinflussung des Strömungskreislaufes herbeizuführen, ohne jedoch die Kennlinie bei aktiver Stellung der zweiten Drosselscheibe zu beeinflussen. Die zweite Drosselscheibe kann dann gezielt zur Steuerung des Übertragungsverhaltens genutzt werden, wobei beliebige Positionen zwischen der ersten und zweiten Stellung eingenommen werden können.

Erfindungsgemäß ist ferner der Außendurchmesser der zweiten Drosselscheibe größer als der Außendurchmesser der ersten Drosselscheibe. Damit kann im Bereich sehr hohen Schlupfes bei Verbringen der zweiten Drosselscheibe in die aktive Stellung hier eine noch größere Momentendrückung, dass heißt Reduzierung des aufnehmbaren Momentes am Primärschaufelrad, als allein durch Wirkung der ersten Drosselscheibe erfolgen.

Bezüglich der konstruktiven Ausführung der hydrodynamischen Kupplung und deren Funktionsprinzip, insbesondere die Art der Durchströmung - zentripetal oder zentrifugal - bestehen keinerlei Restriktionen. Es ist lediglich zu gewährleisten, dass ein optimaler Betriebsmittelfluss im Betriebsmittelversorgungssystem ermöglicht wird.

Die zweite Drosselscheibe ist axial gegenüber dem Primärrad verschiebbar, kann aber

   a) drehfest mit dem Primärschaufelrad verbunden sein oder aber
   b) relativ zum Primärschaufelrad in Umfangsrichtung bewegbar sein.

In beiden Fällen ist jedoch eine Relativbewegung in axialer Richtung von Primärschaufelrad und zweiter Drosselscheibe möglich. Auch für die Ausführungen der konstruktiven Ausgestaltung der drehfesten Kopplung zwischen Drosselscheibe und Primärschaufelrad sowie der Gewährleistung der axialen Verschiebbarkeit bestehen keine Beschränkungen. Diese Kopplungen können als kraftschlüssige oder formschlüssige Verbindungen ausgeführt werden. Im Fall b) wird die zweite Drosselscheibe über ein Axial- und Radialgleitlager am Primärschaufelrad gelagert. Generell ist eine drehfeste Lagerung nicht erforderlich, wobei dann mindestens ein Axialgleitlager vorzusehen ist.

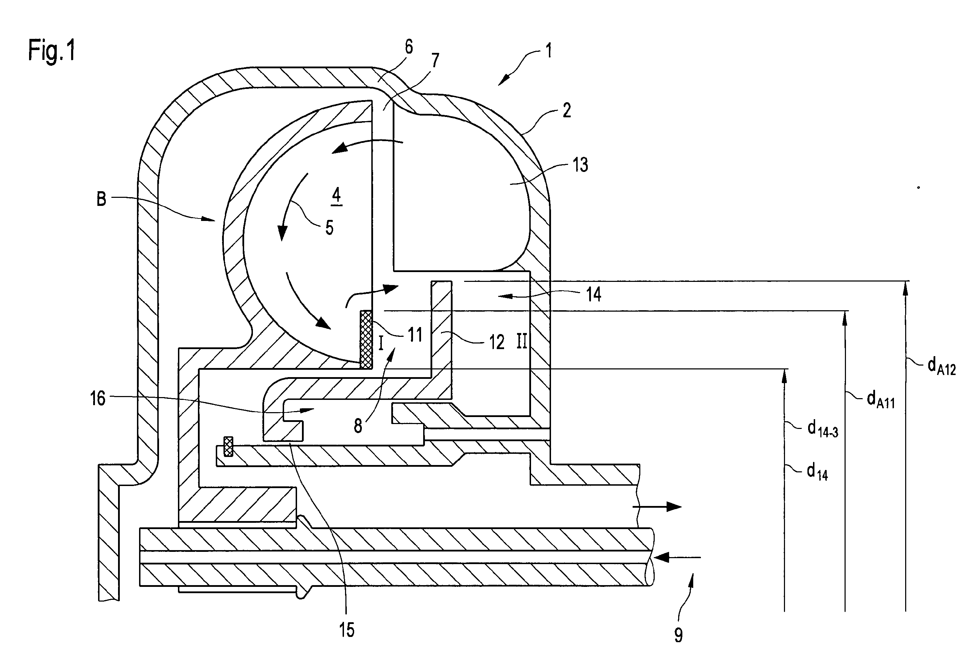

Die erste Drosselscheibe und die zweite Drosselscheibe können in Axialrichtung der hydrodynamischen Kupplung nebeneinander beziehungsweise hintereinander angeordnet sein. Gemäß einer vorteilhaften Ausführungsform ist die erste Drosselscheibe mit ihrer Erstreckung in Radialrichtung der hydrodynamischen Kupplung vollständig oder teilweise neben der zweiten Drosselscheibe angeordnet, das heißt, in einer Projektion der zweiten Drosselscheibe in Axialrichtung in die Ebene der ersten Drosselscheibe liegt die erste Drosselscheibe teilweise oder vollständig innerhalb der Projektionsfläche (welche sich in Radialrichtung der hydrodynamischen Kupplung, senkrecht zu der Drehachse der hydrodynamischen Kupplung erstreckt) der zweiten Drosselscheibe. Man könnte auch sagen, in Axialrichtung gesehen wird die erste Drosselscheibe von der zweiten Drosselscheibe teilweise oder vollständig überdeckt. Dies ist beispielsweise in der Figur 1 dargestellt.

Die erfindungsgemäße Lösung wird nachfolgend anhand von Figuren erläutert. Darin ist im Einzelnen folgendes dargestellt:

Figur 1    verdeutlicht eine erfindungsgemäße Ausführung einer hydrodynamischen Kupplung;

Figur 2    verdeutlicht anhand eines M/v - Diagramms die sich einstellenden Verhältnisse mit und ohne erfindungsgemäße Ausführung.

Die Figur 1 verdeutlicht in schematisch vereinfachter Darstellung den Grundaufbau einer erfindungsgemäß ausgeführten hydrodynamischen Kupplung 1 im Axialschnitt. Diese umfasst ein Primärrad 2 und ein Sekundärrad 3, die miteinander einen mit Betriebsmittel befüllbaren Arbeitsraum 4 bilden. Das Primärrad 2 fungiert dabei in der Regel als Pumpenrad, und das Sekundärschaufelrad 3 als Turbinenrad bei der Leistungsübertragung beim Einsatz in Antriebssträngen von der Antriebsmaschine zum Abtrieb betrachtet. Das Primärschaufelrad 2 ist dabei mit einer hier nicht dargestellten Antriebsmaschine wenigstens mittelbar, dass heißt direkt oder indirekt über weitere Übertragungselemente drehfest verbunden, während das Sekundärschaufelrad 3 mit einem hier im einzelnen nicht dargestellten Abtrieb wenigstens indirekt, dass heißt entweder direkt oder über weitere Übertragungselemente verbindbar ist. Verbindbar bedeutet dabei, dass entweder eine ständige drehfeste Verbindung vorgesehen ist oder aber auch eine Schaltbarkeit gegeben sein kann. Im Arbeitsraum 4 stellt sich bei Rotation des Primärschaufelrades 2 ein Strömungskreislauf 5 ein. Dieser ist hier mittels eines Pfeils dargestellt Bei der hydrodynamischen Kupplung 1 kann es sich dabei um eine hydrodynamische Kupplung mit stehendem Gehäuse oder aber, wie hier dargestellt, mit einem mitrotierendem Gehäuse in Form einer Kupplungsschale 6 handeln. Die Kupplungsschale 6 ist drehfest mit dem Primärschaufelrad 2 verbunden und umschließt das Sekundärschaufelrad 3 in Umfangsrichtung vollständig und in radialer Richtung teilweise. Die Kupplungsschale 6 kann dabei mit dem Primärschaufelrad 2 auch als integrale Baueinheit ausgeführt werden. Die hydrodynamische Kupplung, insbesondere der Arbeitsraum 4, ist, wie bereits ausgeführt, befüllbar. Dazu ist der hydrodynamischen Kupplung 1 ein Betriebsmittelversorgungs- und Führungssystem 9 zugeordnet. Dieses ist mit wenigstens einem Eintritt 7 und einem Austritt 8 aus dem Arbeitsraum gekoppelt. Je nach Art der Durchströmung der hydrodynamischen Kupplung 1 können Eintritt 7 und Austritt 8 unterschiedlich angeordnet sein. Im dargestellten Fall sind beispielhaft die Positionen von Eintritt 7 und Austritt 8 bei zentripetaler Durchströmung wiedergegeben. Der Eintritt 7 ist im Bereich der Trennebene T zwischen den Schaufelrädern 2 und 3 im Bereich der äußeren Abmessungen des Arbeitsraumes 4 angeordnet. Der Austritt 8 erfolgt im Bereich des inneren Durchmessers des Arbeitsraumes 4. Erfindungsgemäß sind Mittel 10 zur Beeinflussung des Strömungskreislaufes 5 im Arbeitsraum 4 vorgesehen. Diese umfassen eine erste Drosselscheibe 11, die einem der beiden Schaufelräder - Primärschaufelrad 2 oder Sekundärschaufelrad 3 - im dargestellten Fall dem Sekundärschaufelrad 3 zugeordnet ist und damit dem Eintritt des Strömungskreislaufes 5 in das Primärschaufelrad 2 vorgeordnet ist. Die erste Drosselscheibe 11 ist im dargestellten Fall drehfest mit dem Sekundärschaufelrad 3 verbunden. Diese ist im Bereich der Trennebene T zwischen dem Primärschaufelrad 2 und dem Sekundärschaufelrad 3 angeordnet und erstreckt sich vom Innendurchmesser $d_{I4-3}$ des Arbeitsraumes 4 am vom Sekundärschaufelrad 3 gebildeten Teil des Arbeitsraumes 4 in diesen hinein. Vorzugsweise ist die Drosselscheibe 11 derart ausgeführt, dass diese parallel zur Trennebene T ausgerichtet ist. Der Außendurchmesser $d_{A11}$ der Drosselscheibe 11 ist dabei größer als der Innendurchmesser $d_{I4}$ des Arbeitsraumes 4. Dadurch wird erreicht, dass auch bei minimalem Füllungsgrad $FG_{min}$ und hohem Schlupf noch eine zusätzliche Drückung des aufnehmbaren Momentes $M_P$ am Primärschaufelrad 2 realisiert wird. Die erste Drosselscheibe 11 ist dabei im Bereich des Anlaufens der hydrodynamischen Kupplung 1 bei sehr hohen Schlupfwerten zwischen 100 % bis 70 % wirksam. Das bedeutet, dass in diesem Bereich minimaler Drehzahlverhältnisse ν, dass minimal von der hydrodynamischen Kupplung 1 aufnehmbare Moment, welches dem Moment $M_P$ am Primärschaufelrad 2 entspricht, beeinflusst werden kann und kleiner als das theoretisch bei diesem Befüllungsgrad $FG_{min}$ ohne Beeinflussung bzw die erfindungsgemäßen zusätzlichen Maßnahmen sich einstellende aufnehmbare Moment $M_P$ ist. Es ergibt sich damit eine Verlagerung des durch das Primärschaufelrad 2 aufnehmbaren Momentes $M_P$ in Richtung zu einem Zielpunkt in der Kupplungskennlinie beziehungsweise Pumpenkennlinie in Richtung eines geringen Momentes im Drehzahl-/Drehmornentenkennfeld im Bereich hoher Schlupfwerte. Mit geringer werdendem Schlupf, dass heißt Angleichung der Drehzahlen von Primärschaufelrad 2 und Sekundärschaufelrad 3 Richtung Drehzahlgleichheit und mit zunehmendem Füllungsgrad in Richtung maximalem Füllungsgrad $FG_{max}$ stellt sich im Arbeitsraum 4 auch mit der ersten Drosselscheibe 11 ein stabiler Strömungskreislauf ein, wobei der Einfluss der Drosselscheibe 11 auf diesen sich mit verringerndem Schlupf verringert. Um jedoch auch eine Kennlinienanpassung im Normalbetrieb, dass heißt auch bei größerem Füllungsgrad FG > $FG_{min}$ und geringerem Schlupf zu erzielen, umfassen die Mittel zur Beeinflussung des Strömungskreislaufes 10 eine weitere zweite Drosselscheibe 12, welche ebenfalls im Bereich der Trennebene T zwischen dem Primärschaufelrad 2 und dem Sekundärschaufelrad 3 angeordnet ist, wobei die Anordnung in axialer Richtung zwischen dem Sekundärschaufelrad 3 und dem Primärschaufelrad 2 betrachtet, der ersten Drosselscheibe 11 nachgeordnet erfolgt und die zweite Drosselscheibe 12 zwischen einer ersten aktiven Stellung I und einer zweiten inaktiven Stellung II und umgekehrt verschiebbar ist. Die zweite Drosselscheibe 12 ist dabei dem Primärschaufelrad 2 zugeordnet und an diesem axial verschiebbar gelagert. Die zweite Drosselscheibe 12 ist in axialer Richtung zwischen der ersten aktiven Stellung I, welche durch die Anordnung der Drosselscheibe 12 in axialer Richtung im Bereich der Trennebene T charakterisiert ist und einer zweiten inaktiven Stellung II verschiebbar. Die zweite inaktive Stellung II ist dabei durch eine Lage der Drosselscheibe 12 charakterisiert, welche in axialer Richtung vorzugsweise möglichst weit in axialer Richtung der maximalen axialen Erstreckung des Strömungskreislaufes, vorzugsweise außerhalb des Strömungskreislaufes angeordnet ist. Die Ausführung gemäß Figur 1 offenbart ein Primärschaufelrad 2 mit einem von einer Beschaufelung 13 freien Bereich 14, welcher im Bereich des Innendurchmessers $d_{I4}$ des Arbeitsraumes 4 angeordnet ist. In diesem Bereich 14 ist die Drosselscheibe 12 angeordnet und dient dabei der Führung des Strömungskreislaufes in diesem Bereich in Abhängigkeit von der axialen Stellung zwischen den Positionen I und II der Drosselscheibe 12. Die inaktive Stellung II ist dabei durch eine Position im Bereich der in axialer Richtung äußeren Abmessungen des Arbeitsraumes 4 charakterisiert. Die zweite Drosselscheibe 12 ist am Primärschaufelrad 2 in axialer Richtung verschiebbar geführt. Konstruktiv kann dies auf unterschiedliche Art und Weise realisiert werden. Im einfachsten Fall ist lediglich eine Gleitpaarung 15 zwischen der zweiten Drosselscheibe 12 und dem Primärschaufelrad 2 vorgesehen. Eine drehfeste Verbindung ist dabei nicht erforderlich. Denkbar sind jedoch auch entsprechende form- oder kraftschlüssige Verbindungen, die eine drehfeste Kopplung bei gleichzeitiger axialer Verschiebbarkeit ermöglichen. Zur Verschiebung der Drosselscheibe 12 ist dieser eine Stelleinrichtung 16 zugeordnet. Diese kann unterschiedlich ausgeführt sein, im einfachsten Fall wird die Verschiebbarkeit druckgesteuert realisiert, dass heißt die Drosselscheibe 12 ist mit einem Kolbenelement verbunden oder aber bildet dieses, welches von einem Druckmittel beaufschlagt wird.

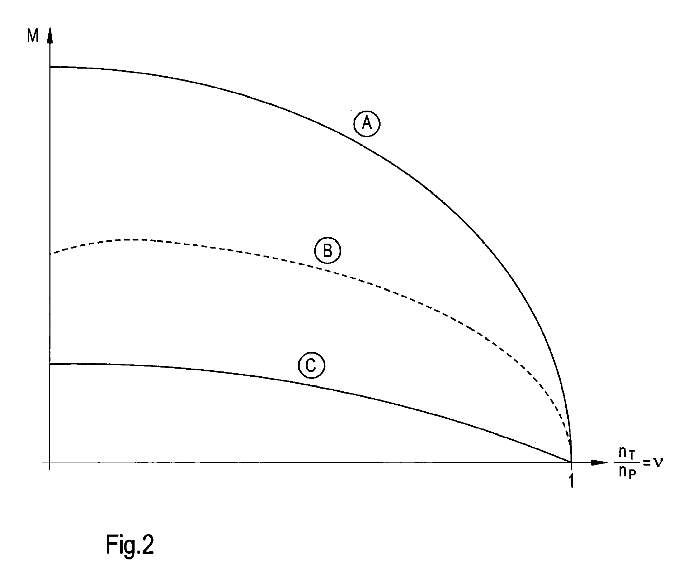

Mit der erfindungsgemäßen Kombination einer festen Drosselscheibe 11 und einer axial verschiebbaren Drosselscheibe 12 können dabei Kennlinienanpassungen im Drehzahl-/Drehmomentenkennfeld vorgenommen werden, so dass ein großer Teil gewünschter Betriebsbereiche abgedeckt werden kann. Die zweite Drosselscheibe 12 weist dabei einen Außendurchmesser $d_{A12}$ auf, welcher größer ist als der Außendurchmesser $d_{A11}$ der ersten Drosselscheibe 11 ist. Damit wird erreicht, dass quasi auch die zweite Drosselscheibe 12 in ihrer aktiven Stellung, in welcher diese im Bereich der Trennebene T positioniert ist, eine noch stärkere Drückung des aufnehmbaren Momentes $M_P$ am Primärschaufelrad 2 erzielt. Die mit einer erfindungsgemäß mit einer festen und einer in axialer Richtung verschiebbaren Drosselscheibe 12 ausgeführte hydrodynamische Kupplung 1 erzielbaren Kennlinien sind in der Figur 2 wiedergegeben, Diese verdeutlicht anhand des Drehzahlverhältnis-/Momentenkennfeldes einzelne Kupplungskennlinien. Die Kupplungskennlinie A verdeutlicht dabei das aufnehmbare Moment $M_P$ der hydrodynamischen Kupplung 1 über das Drehzahlverhältnis $\nu = n_T/n_P$ mit $n_T$ = Drehzahl des Sekundärschaufelrades 3 und $n_P$ = Drehzahl des Primärrades 2. Die Kennlinie A verdeutlicht dabei das aufnehmbare Moment der hydrodynamischen Kupplung 1 ohne die feste Drosselscheibe 11 mit nur einer axial verschiebbaren Drosselscheibe 12 in der inaktiven Stellung II. Dies entspricht einer hydrodynamischen Kupplung 1 ohne Mittel zur Beeinflussung des Strömungskreislaufes. In diesem Fall wird bei einem vorgegebenen Füllungsgrad FG der Strömungskreislauf im Arbeitsraum 4 nicht beeinflusst, so dass sich hier in Betriebsbereichen mit hohem Schlupf ein sehr hohes, durch die hydrodynamische Kupplung 1 aufnehmbares Moment $M_P$ ergibt. Da es jedoch häufig zur Anpassung an die entsprechende Antriebsmaschine gefordert ist, das aufnehmbare Moment $M_P$ im Bereich hohen Kupplungsschlupfes, dass heißt bei sehr geringem Drehzahlverhältnis $\dfrac{n_T}{n_P}$ zu gewährleisten, ist eine Drückung des aufnehmbaren Momentes $M_P$ gerade in hohen Schlupfbereichen, dass heißt bei Schlupfwerten zwischen 100 % bis 70 %, erwünscht. Mit der festen Drosselscheibe 11 wird dieses bei Verharren der verschiebbaren Drosselscheibe 12 in der inaktiven Stellung II realisiert. Für einen bestimmten Füllungsgrad FG ergibt sich dann die Kennlinie B. Daraus wird ersichtlich, dass gerade in hohen Schlupfbereichen eine sehr starke Drückung des aufnehmbaren Momentes $M_P$ erfolgt, während diese Drückung in Richtung geringen Schlupfes abnimmt. Demgegenüber verdeutlicht die Kennlinie C die Kupplungskennlinie für den gleichen Füllungsgrad FG mit der axial verschiebbaren Drosselscheibe 12 in der Stellung aktiv. Aus dieser ist eine weitere Drückung des aufnehmbaren Momentes $M_P$ in Bereichen hohen Kupplungsschlupfes erkennbar. Wie bereits ausgeführt, dient die erfindungsgemäße Lösung hauptsächlich der Kennlinienanpassung in der inaktiven Stellung der axial verschiebbaren Drosselscheibe 12, ohne dabei die Kennlinie in der aktiven Stellung der verschiebbaren Drosselscheibe 12 zu ändern. Die in der Figur 2 dargestellten Kupplungskennlinien beziehen sich dabei immer auf den gleichen Füllungsgrad für die einzelnen Kombinationen und unterschiedlichen Stellungen der axial verschiebbaren Drosselscheibe 12. Dabei sind die Kennlinien über den gesamten Schlupfbereich für einen bestimmten Füllungsgrad ohne Änderung der Position der axial verschiebbaren Drosselscheibe 12 aufgenommen. Zusätzlich kann noch eine weitere Beeinflussung der Küpplungskennlinie durch die Verschiebung der Drosselscheibe 12 zwischen ihrer inaktiven Stellung II und ihrer aktiven Stellung I und umgekehrt erzielt werden. Die Ansteuerung der zweiten axial verschiebbaren Drosselscheibe 12 erfolgt dabei im Hinblick auf das Zusammenwirken mit einer Antriebsmaschine und den am Abtrieb zu erzielenden Verhältnissen, wobei dies vom konkreten Einsatzfall abhängig ist. Diesbezüglich wird auf die einzelnen Möglichkeiten der genauen Abstimmung der Aktivierung der verschiebbaren Drosselscheibe 12 hier nicht näher eingegangen.

Wie bereits ausgeführt, kann die hydrodynamische Kupplung 1 sowohl mit zentripetaler als auch zentrifugaler Durchströmung betrieben werden. Dies hängt im einzelnen von der Anbindung des Betriebsmittelversorgungssystems 9 an den Arbeitsraum 4 und die konstruktiven Gegebenheiten ab. Dementsprechend können der Eintritt 7 und der Austritt 8 beziehungsweise die Eintritte 7 und Austritte 8 entsprechend angeordnet werden. Bei in Figur 1 nicht dargestellter, zentrifugaler Durchströmung erfolgt die Zufuhr zum Arbeitsraum 4 aus Richtung der Rotationsachse R der hydrodynamischen Kupplung 1 in radialer Richtung zum Arbeitsraum 4 hin, vorzugsweise Über entsprechende Befüllkanäle in der Beschaufelung der hydrodynamischen Kupplung 1 selbst, wobei diese vorzugsweise am Primärschaufelrad 2 angeordnet sind. Der Eintritt 7 ist dann vorzugsweise im Bereich des geringsten statischen Druckes angeordnet. Der Austritt 8 ist dann in radialer Richtung im Bereich des Außenumfanges der hydrodynamischen Kupplung 1, entweder im Bereich der Trennebene T im Bereich des Außenumfanges $D_{A4}$ des Arbeitsraumes 4 oder aber einem der Schaufelräder, vorzugsweise dem Primärschaufelrad, angeordnet. Bei zentripetaler Durchströmung, wie in Figur 1 verdeutlicht, erfolgt die Betriebsmittelzufuhr im Bereich des äußeren Durchmessers des Arbeitsraumes 4, insbesondere im Bereich der Trennebene T zwischen dem Primärschaufelrad 2 und dem Sekundärschaufelrad 3 in dem zwischen diesen gebildeten Spalt. Der Austritt aus dem Arbeitsraum 4 erfolgt dann in radialer Richtung nach innen zur Rotationsachse R, vorzugsweise im Bereich der Trennebene T am Innenumfang $d_{I4}$ des Arbeitsraumes 4. In diesem Fall erfolgt die Betriebsmittelzufuhr im Betriebsmittelversorgungssystem 9 über sogenannte Schaufelradnebenräume, für eine Ausführung gemäß Figur 1 einem Nebenraum 17, welcher vom Außenumfang 18 des Sekundärschaufelrades und dem Innenumfang 19 der Kupplungsschale 6 gebildet wird. Die Betriebsmittelabfuhr erfolgt über entsprechende Kanäle am Sekundärschaufelrad und zwischen Primärschaufelrad 2 und Sekundärschaufelrad 3.

Bezüglich der Ausführung der Stelleinrichtung 16 für die zweite Drosselscheibe 12 bestehen keinerlei Beschränkungen. Im einfachsten Fall wird jedoch Betriebsmittel aus dem Betriebsmittelversorgungssystem 9 als Druckmittel genutzt. Eine autarke Druckmittelquelle ist ebenfalls denkbar.

**Bezugszeichenliste**

| | |
|---|---|
| 1 | hydrodynamische Kupplung |
| 2 | Primärschaufelrad |
| 3 | Sekundärschaufelrad |
| 4 | Arbeitsraum |
| 5 | Strömungskreislauf |
| 6 | Kupplungsschale |
| 7 | Eintritt |
| 8 | Austritt |
| 9 | Betriebsmittelversorgungssystem |
| 10 | Mittel zur Beeinflussung des Strömungskreislaufes |
| 11 | erste Drosselscheibe |
| 12 | zweite Drosselscheibe |
| 13 | Beschaufelung |
| 14 | von der Beschaufelung 13 freier Bereich |
| 15 | Gleitpaarung |
| 16 | Stelleinrichtung |
| 17 | Nebenraum |
| 18 | Außenumfang |
| 19 | Innenumfang |
| | |
| T | Trennebene |
| | |
| $d_{A4}$ | Außenumfang des Arbeitsraumes 4 |
| $d_{I4}$ | Innenumfang des Arbeitsraumes |
| $d_{I4-3}$ | Innenumfang des Arbeitsraumes im Bereich des Sekundärschaufelrades 3 |
| $d_{A11}$ | Außenumfang der Drosselscheibe 11 |
| $d_{A12}$ | Außenumfang der Drosselscheibe 12 |
| I | aktive Stellung der Drosselscheibe 12 |
| II | inaktive Stellung der Drosselscheibe 12 |

**Patentansprüche**

1.  Hydrodynamische Kupplung (1)

    1.1 mit einem Primärschaufelrad (2) und einem Sekundärschaufelrad (3), die einen mit Betriebsmittel befüllbaren Arbeitsraum (4) bilden;
1.2 mit einem Betriebsmittelversorgungssystem (9);
1.3 mit Mitteln (10) zur Beeinflussung des Strömungskreislaufes (5) des sich im Arbeitsraum (4) einstellenden Arbeitskreislaufes;
1.4 mit einer Drosselscheibe (11), welche im Bereich der Trennebene (T) zwischen Primärschaufelrad (2) und Sekundärschaufelrad (3) angeordnet ist, einem der Schaufelräder (2, 3) zugeordnet ist und dem Austritt des Strömungskreislaufes (5) aus dem Sekundärschaufelrad (3) nachgeordnet oder dem Eintritt in das Primärschaufelrad (3) vorgeordnet ist, wobei der Außendurchmesser ($d_{A11}$) der Drosselscheibe (11) größer als der Innendurchmesser ($d_{I4}$) des Arbeitsraumes (4) ist; **gekennzeichnet durch** die folgenden Merkmale:
1.5 die Mittel (10) umfassen eine zweite Drosselscheibe (12), die in axialer Richtung zwischen dem Sekundärschaufelrad (3) und dem Primärschaufelrad (2) betrachtet der ersten Drosselscheibe (11) nachgeordnet ist, einen größeren Außendurchmesser ($d_{A12}$) als der Innendurchmesser ($d_{I4}$) des Arbeitsraumes (4) aufweist und axial verschiebbar zwischen einer ersten aktiven Stellung (1) und einer zweiten inaktiven Stellung (II) gegenüber dem Primärschaufelrad (2) ist, wobei die erste Stellung **durch** eine Position im Bereich der Trennebene (T) zwischen dem Primärschaufelrad (2) und dem Sekundärschaufelrad (3) charakterisiert ist und die zweite Stellung (II) **durch** eine Position im Bereich der axial äußeren Abmessung des Primärschaufelrades (2) charakterisiert ist.

2.  Hydrodynamische Kupplung (1) nach Anspruch 1, **dadurch gekennzeichnet, dass** der Außendurchmesser ($d_{A11}$) der ersten Drosselscheibe (11) kleiner als der Außendurchmesser ($d_{A12}$) der zweiten Drosselscheibe (12) ist.

3.  Hydrodynamische Kupplung (1) nach einem der Ansprüche 1 oder 2, **dadurch gekennzeichnet, dass** die erste Drosselscheibe (11) drehfest mit dem Sekundärschaufelrad (3) verbunden ist.

4.  Hydrodynamische Kupplung (1) nach einem der Ansprüche 1 bis 3, **dadurch gekennzeichnet, dass** die zweite Drosselscheibe (12) drehfest mit dem Primärschaufelrad (2) verbunden ist, jedoch gegenüber diesem axial verschiebbar.

5.  Hydrodynamische Kupplung (1) nach Anspruch 4, **dadurch gekennzeichnet, dass** die Verbindung zwischen dem Primärschaufelrad (2) und der zweiten Drosselscheibe (12) als form- oder kraftschlüssige Verbindung ausgeführt ist.

**6.** Hydrodynamische Kupplung (1) nach einem der Ansprüche 1 bis 5, **dadurch gekennzeichnet, dass** zwischen dem Primärschaufelrad (2) oder einem mit diesem drehfest gekoppelten Element und der zweiten Drosselscheibe (12) wenigstens eine Gleitpaarung, zur Bildung eines Axialgleitlagers, vorgesehen ist.

**7.** Hydrodynamische Kupplung (1) nach einem der Ansprüche 1 bis 3, **dadurch gekennzeichnet, dass** die zweite Drosselscheibe (12) fremdgelagert ist.

**8.** Hydrodynamische Kupplung (1) nach einem der Ansprüche 1 bis 7, **gekennzeichnet durch** die folgenden Merkmale:

> 8.1 das Primärschaufelrad (2) weist einen von der Beschaufelung (13) freien Bereich auf
> 8.2 die zweite Drosselscheibe (12) ist im von der Beschaufelung (13) freien Bereich angeordnet,

**9.** Hydrodynamische Kupplung (1) nach einem der Ansprüche 1 bis 8, **dadurch gekennzeichnet, dass** der zweiten Drosselscheibe (12) eine Stelleinrichtung (16) zugeordnet ist.

**10.** Hydrodynamische Kupplung (1) nach Anspruch 9, **dadurch gekennzeichnet, dass** die Stelleinrichtung von einem mit der Drosselscheibe (12) verbundenen oder aber von dieser gebildeten Kolben gebildet wird, welche durch eine Druckmittelquelle beaufschlagt wird.

**11.** Hydrodynamische Kupplung (1) nach Anspruch 10, **dadurch gekennzeichnet, dass** die Druckmittelquelle Bestandteil des Betriebsmittelversorgungssystems (9) ist.

**12.** Hydrodynamische Kupplung (1) nach einem der Ansprüche 1 bis 11, **dadurch gekennzeichnet, dass** die zweite Drosselscheibe (12) in Axialrichtung der hydrodynamischen Kupplung (1) neben der ersten Drosselscheibe angeordnet ist.

**13.** Hydrodynamische Kupplung (1) nach Anspruch 11, **dadurch gekennzeichnet, dass** die erste Drosselscheibe (11) mit ihrer gesamten Erstreckung in Radialrichtung der hydrodynamischen Kupplung (1) teilweise oder vollständig innerhalb einer Fläche in Radialrichtung der hydrodynamischen Kupplung (1) angeordnet ist, die durch die Erstreckung der ersten Drosselscheibe (11) in Radialrichtung abgedeckt ist.

Fig.1

EP 1 762 737 A2

Fig.2